# EUROPEAN PATENT APPLICATION

(11) **EP 4 772 341 A1**
(43) Date of publication of application: **08.07.2026**
(21) Application number: 25209636.7
(22) Date of filing: 19.10.2025
(51) Int. Cl.: B32B 7/06, B32B 7/12, B32B 15/082, B32B 15/085, B32B 15/088, B32B 15/09, B32B 15/20, B32B 27/08, B32B 27/30, B32B 27/32, B32B 27/36, C09J 7/35

(54) **SINGLE-PIECE TYPE CLOSURE LINER**

(30) Priority: 06.01.2025 TW 114100512
(71) Applicant: Yang, Yen-Wu, 221 New Taipei City (TW)
(72) Inventor: Yang, Yen-Wu, 221 New Taipei City (TW)
(74) Representative: DTS Patent- und Rechtsanwälte PartmbB

(57) **Abstract**

The present application provides a single-piece type closure liner (50), which sequentially includes an upper layer (100), a bonding layer (200) and a sealing lamination layer (300) from top to bottom. The upper layer (100) includes a surface film (110). The bonding layer (200) includes a bonding adhesive (210) and a coating area (220). The sealing lamination layer (300) sequentially includes an electromagnetic induction heating layer (310) and a sealing layer (320) from top to bottom. The coating area (220) is a partial area coated on a lower surface of the upper layer (100), and the bonding layer (200) combines the upper layer (100) with the sealing lamination layer (300) through the bonding adhesive (210). The single-piece type closure liner (50) can improve the convenience for a user to open.

## Description

### BACKGROUND OF THE INVENTION

### 1. Field of the Invention

The present application relates to a closure liner, and particularly to a single-piece type closure liner.

### 2. Description of the Related Art

To prevent contents from leaking and deteriorating due to the impact of external environment, a container opening of a beverage can, a medicine can or other packaging containers may be sealed with a closure liner. Generally, the closure liner is made of a material such as aluminum foil or cardboard. More specifically, a conventional single-piece type closure liner generally refers to a closure liner that contains aluminum foil.

By tightly fitting the closure liner to the container opening, effects of preventing the contents from leaking and preserving the contents tightly can be achieved.

In addition, to improve the ease of opening of the closure liner, some closure liners may be equipped with a pull valve structure, or part of un-bonded area may be retained in the closure liner.

### BRIEF SUMMARY OF THE INVENTION

However, because the conventional design of a closure liner is mainly considered for sealing, but not for the ease of opening, the aluminum foil or cardboard at an opening of a container is not easy to open with fingers, and it is cumbersome and dangerous to cut with a knife or poke with an awl, resulting in inconvenience for users. In addition, although some closure liners are provided with pull valve structures, or part of un-bonded area is retained in the closure liner, which often results in the closure liner being thickened by the pull valve structure or the un-bonded area.

Therefore, how to solve the above-mentioned problems on the conventional closure liner, and effectively improve the ease of opening and avoid unnecessary thickening of the closure liner, has become a problem urgently to be solved in the technical field.

To solve the above-mentioned problems, the present application provides a single-piece type closure liner, which sequentially includes an upper layer, a bonding layer and a sealing lamination layer from top to bottom. The upper layer includes a surface film. The bonding layer includes a bonding adhesive and a coating area. The sealing lamination layer sequentially includes an electromagnetic induction heating layer and a sealing layer from top to bottom. The coating area is a partial area coated on a lower surface of the upper layer, and the bonding layer combines the upper layer with the sealing lamination layer through the bonding adhesive.

In some embodiments, a section width of the partial area is greater than or equal to one-sixth of a section width of the single-piece type closure liner, and the section width of the partial area is smaller than or equal to five-sixths of the section width of the single-piece type closure liner.

In some embodiments, a material of the coating area is gloss oil or silicone oil.

In some embodiments, a coating mode of the coating area is full coating or dot coating.

In some embodiments, the sealing lamination layer further includes a bonding film. The bonding film is disposed above the electromagnetic induction heating layer. A material of the bonding film is at least one selected from the group consisting of Polyethylene (PE), Polypropylene (PP), Polyamide (PA), Expandaple Polyproplene (EPP) and Expandable Polyethylene (EPE).

In some embodiments, the sealing lamination layer further includes a lamination film. The lamination film is disposed above the electromagnetic induction heating layer. A material of the lamination film is at least one selected from the group consisting of Polyethylene Terephthalate (PET), PA, Polyethylene Naphthalate (PEN), PE and PP.

In some embodiments, a material of the surface film is at least one selected from the group consisting of PP, PET, PE, PA and Ethylene-Methyl Acrylate Copolymer (EMAC).

In some embodiments, the sealing layer is a hot melt glue or a combination of a sealing film and an adhesive. A material of the hot melt glue is at least one selected from the group consisting of Ethylene Vinyl Acetate copolymer (EVA), Polyisobutylene (PIB), Ethylene Butyl Acrylate Copolymer (EBA), Ethylene Acrylic Acid copolymer (EAA), EMAC, Polyacrylate, Polyacetate and Ethylene Methacrylic Acid copolymer (EMAA), and a material of the sealing film is at least one selected from the group consisting of PE, PP, PA, Polyvinylidene Chloride (PVDC), Ethylene Vinyl Alcohol Copolymer (EVOH) and PET. The adhesive is disposed between the sealing film and the electromagnetic induction heating layer.

In some embodiments, the bonding adhesive is a dry compound adhesive or a hot melt lamination glue, and a material of the hot melt lamination glue is at least one selected from the group consisting of PE, PP, EMAC, EMAA, EAA, Ethylene Ethyl Acrylate Copolymer (EEA) and Ethylene Methyl Methacrylate (EMMA).

In some embodiments, through the bonding adhesive, a peel strength between the upper layer and the sealing lamination layer is greater than or equal to 17.8 N/15 mm.

In some embodiments, the electromagnetic induction heating layer is aluminum foil or a wireless information integrated flake.

In some embodiments, the wireless information integrated flake includes a base film, an information and heating layer and a first adhesive layer. The information and heating layer includes an information area and an electromagnetic induction heating ring. The first adhesive layer is located between the base film and the information and heating layer. The information area is provided with an antenna and a chip to be mutually conducted, and the electromagnetic induction heating ring surrounds the information area in a plane view angle.

In some embodiments, the wireless information integrated flake further includes a protective layer, located on one side of the information and heating layer away from the base film; and a second adhesive layer, located between the information and heating layer and the protective layer.

In some embodiments, a spacing is formed between the electromagnetic induction heating ring and the information area. In some embodiments, the spacing is a space between the outermost edge of the information area and the innermost edge of the electromagnetic induction heating ring and is 0.1 mm to 3 mm. In some preferred embodiments, the spacing is fully filled between the electromagnetic induction heating ring and the information area.

In some embodiments, the information and heating layer further includes at least one physical connecting bridge configured to connect the information area and the electromagnetic induction heating ring.

With adoption of the single-piece type closure liner provided by the present application, those of ordinary skill in the art can prevent the contents from leaking and deteriorating due to the impact of external environment, and a user can directly pinch the coating structure (i.e., the structure above the coating area in the bonding layer) by hand to easily uncover the single-piece type closure liner from the container opening without the help of foreign objects, thereby further realizing an effect of facilitating opening and reducing the thickness of the closure liner.

One of the aspects of the present application is proposed on the basis of the problem points in the conventional technology, and aims to provide a single-piece type closure liner that can further improve the convenience for the user to open and reduce the thickness of the closure liner. In other words, the single-piece type closure liner provided by the present application can take into account the sealing of the preserved contents, the convenience for the user to open, and the reduction of the thickness of the closure liner.

### BRIEF DESCRIPTION OF THE DRAWINGS

FIG. 1 is a schematic cross-sectional diagram of a single-piece type closure liner according to Embodiment 1 of the present application.
FIG. 2 is a schematic cross-sectional diagram of a single-piece type closure liner according to Embodiment 2 of the present application.
FIG. 3 is a schematic cross-sectional diagram of a single-piece type closure liner according to Embodiment 3 of the present application.
FIG. 4A to FIG. 4B are side views of a single-piece type closure liner according to the present application.
FIG. 5 is a schematic cross-sectional diagram of a wireless information integrated flake according to Embodiment 1 of the present application.
FIG. 6A is a schematic plan diagram of a specific embodiment of an information and heating layer according to the present application.
FIG. 6B is a schematic plan diagram of another specific embodiment of an information and heating layer according to the present application.
FIG. 7A is a schematic plan diagram of a specific embodiment of an information area according to the present application.
FIG. 7B is a schematic plan diagram of another specific embodiment of an information area according to the present application.
FIG. 8 is a schematic cross-sectional diagram of a wireless information integrated flake according to Embodiment 2 of the present application.

### DETAILED DESCRIPTION OF THE INVENTION

Implementations of the present application are described below with specific embodiments, and those skilled in the art can understand other advantages and effects of the present application from the contents disclosed in the description. The present application may also be implemented or applied with other different specific embodiments, and the details in the description may also be modified and changed based on different views and applications, without departing from the spirit of the present application.

Unless otherwise specified in the text, the term "A to B" used in the description and the claims includes the meaning of "above A and below B". For example, the term "10 wt% to 40 wt%" includes the meaning of "greater than 10 wt% and less than 40 wt%".

In addition, in the context described in the present application, it is to be noted that terms such as "first", "second" and "third" are used for distinguishing elements, rather than limiting the elements themselves or indicating a particular order of elements. It is to be noted that in the description described below, the same component or step can be represented with the same number.

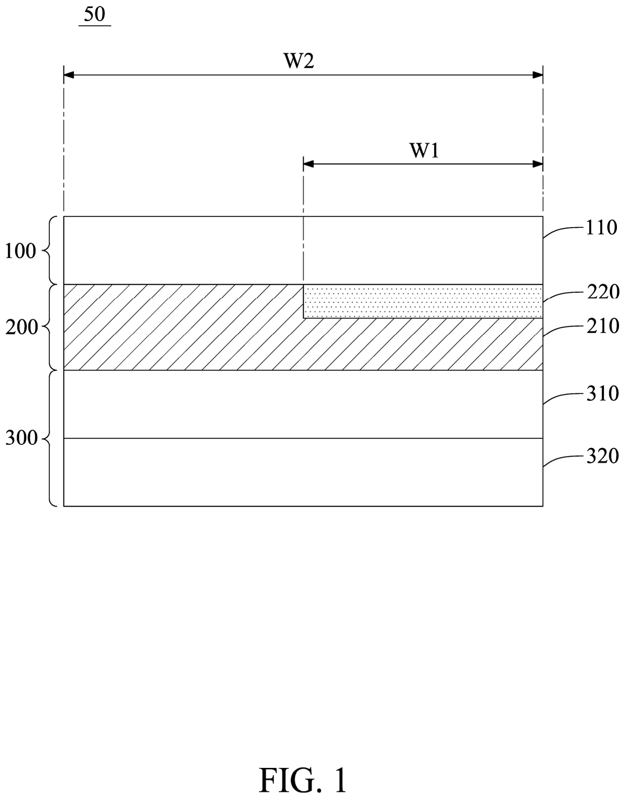

Please refer to FIG. 1, FIG. 1 is a schematic cross-sectional diagram of a single-piece type closure liner 50 according to Embodiment 1 of the present application. As shown in FIG. 1, the single-piece type closure liner 50 sequentially includes an upper layer 100, a bonding layer 200 and a sealing lamination layer 300 from top to bottom. The upper layer 100 includes a surface film 110; the bonding layer 200 includes a bonding adhesive 210 and a coating area 220; and the sealing lamination layer 300 sequentially includes an electromagnetic induction heating layer 310 and a sealing layer 320 from top to bottom. Each structure will be described in more detail below.

### <<Upper layer 100>>

The upper layer 100 is disposed on the uppermost layer of the single-piece type closure liner 50. As shown in FIG. 1, the upper layer 100 includes the surface film 110 which is used as the uppermost layer (i.e., the surface layer) of the single-piece type closure liner 50. In some embodiments, an upper surface and/or a lower surface of the surface film 110 may be printing surfaces for printing different patterns. In some embodiments, a material of the surface film 110 may be at least one selected from of the group consisting of PP, PET, PE, PA and EMAC. In addition, a thickness of the surface film 110 is preferably 12 µm to 150 µm, and within this range, a tensile strength is large, the surface is flat, and the brightness is good; and additionally, when heat conduction is sensed below the single-piece type closure liner 50, the surface film 110 can be prevented from being adhered to other external elements (such as bottle caps).

### <<Bonding layer 200>>

The bonding layer 200 is disposed between the upper layer 100 and the sealing lamination layer 300. Taking FIG. 1 as an example, the bonding layer 200 includes a bonding adhesive 210 and a coating area 220. The coating area 220 may be coated on a partial area of the lower surface of the upper layer 100, and the bonding layer 200 can combine the upper layer 100 and the sealing lamination layer 300 through the bonding adhesive 210. The structural configuration of the coating area 220 can ensure that a coating structure (i.e., a structure above the coating area 220 in the bonding layer 200) and the sealing lamination layer 300 are compounded to each other but easily stripped, thereby allowing a user to easily uncover the single-piece type closure liner 50 by hand without the help of foreign objects. In some embodiments, the single-piece type closure liner 50 may allow a peel strength between the upper layer 100 and the sealing lamination layer 300 to be greater than or equal to 17.8 N/15 mm through the bonding adhesive 210, thereby stably combining the upper layer 100 and the sealing lamination layer 300. In some embodiments, the bonding adhesive 210 may be a jointing glue that allows the peel strength between the upper layer 100 and the sealing lamination layer 300 to be greater than or equal to 17.8 N/15 mm, but is not limited thereto. In some embodiments, the bonding adhesive 210 may be a dry compound adhesive, but is not limited thereto. In some other embodiments, the bonding adhesive 210 may be a hot melt lamination glue, and a material of the hot melt lamination glue may be at least one selected from the group consisting of PE, PP, EMAC, EMAA, EAA, EEA, and EMMA. Further, a thickness of the hot melt lamination glue is preferably 4 µm to 60 µm.

### <<Sealing lamination layer 300>>

The sealing lamination layer 300 is disposed on the lowest layer of the single-piece type closure liner 50. Taking FIG. 1 as an example, the sealing lamination layer 300 sequentially includes the electromagnetic induction heating layer 310 and the sealing layer 320 from top to bottom. The electromagnetic induction heating layer 310 may be aluminum foil or a wireless information integrated flake. The aluminum foil is of a structure existing in the conventional closure liner, and the thickness of the aluminum foil is preferably 10 µm to 40 µm, so that a blocking function on moisture and oxygen can be enhanced, and the effects of preventing contents from leaking and preserving the contents tightly are achieved. In addition, according to the present application, the wireless information integrated flake may be used for replacing the aluminum foil, so that the use amount of the aluminum foil can be effectively reduced, and the energy consumption is reduced. Specifically, by means of the wireless information integrated flake according to the present application, a wireless information transmission function may be added, waste of aluminum foil materials may be reduced, the energy consumption is reduced, waste of manpower is avoided, interference of metal and liquid is avoided, production efficiency is improved, communication performance is good, a communication distance is greatly increased, and development of automation, digitization and intelligence of factories, warehouses, logistics, shops and unmanned cashier management is greatly improved. In some embodiments, a thickness of the wireless information integrated flake is preferably 27 µm to 2.5 mm.

The sealing layer 320 is mainly used for sealing a container opening. In some embodiments (such as in FIG. 1), the sealing layer 320 may be, for example, a hot melt glue. A material of the hot melt glue may be at least one selected from the group consisting of EVA, PIB, EBA, EAA, EMAC, Polyacrylate, Polyacetate and EMAA, but is not limited thereto. In addition, a thickness of the hot melt glue is preferably 4 µm to 100 µm. Through some types of formulated hot melt glue, the adhesive can be saved, and even if the content of a glass container contains water, a continuous sealing effect may be achieved; and when the content of the glass container contains hot pepper, garlic, fermented bean curd, honey and spicy additives, the continuous sealing effect may also be achieved.

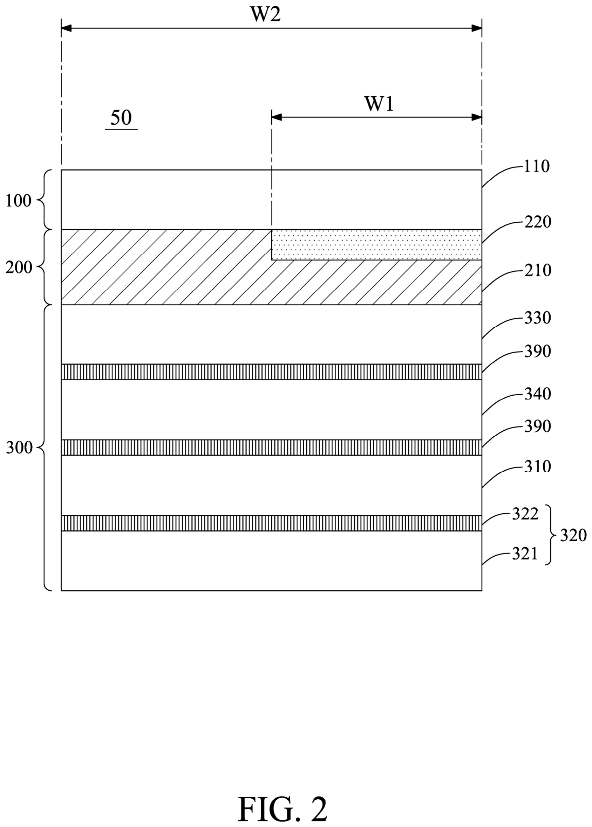

In addition, in another embodiments (such as FIG. 2 to FIG. 3), taking FIG. 2 as an example, the sealing layer 320 may be a combination of a sealing film 321 and an adhesive 322, and the adhesive 322 is disposed between the sealing film 321 and the electromagnetic induction heating layer 310. In some embodiments, a material of the sealing film 321 may be at least one selected from the group consisting of PE, PP, PA, PVDC, EVOH and PET, and a thickness of the sealing film 321 is preferably 12 µm to 100 µm; and the adhesive 322 may be, for example, a dry compound adhesive, but is not limited thereto.

As described above, when the sealing layer 320 is made of the hot melt glue or the combination of the sealing film and the adhesive, the user can more easily uncover the single-piece type closure liner 50 from the bottle opening, or the user can more easily and cleanly uncover the single-piece type closure liner 50 from the bottle opening.

Therefore, the single-piece type closure liner 50 shown in FIG. 1 can not only prevent the contents from leaking and deteriorating due to the impact of external environment, and the user can directly pinch the coating structure by hand to easily uncover the single-piece type closure liner 50 from the container opening without the help of foreign objects, and thus the effect of convenient opening is further achieved. That is, the single-piece type closure liner 50 shown in FIG. 1 may achieve both the sealing performance on the stored contents and the convenience for the user to open. In addition, the single-piece type closure liner 50 shown in FIG. 1 does not need to be provided with a pull valve or an un-bonded area to achieve the effect of convenient opening, that is, the structure of the pull valve is omitted, and space arrangement of the un-bonded area does not need to be reserved, so that configuration required by the single-piece type closure liner 50 can be further reduced, thereby reducing the thickness of the single-piece type closure liner 50.

In some embodiments, a section width W1 of the coated partial area on the lower surface of the upper layer 100 may be greater than or equal to one-sixth of a section width W2 of the single-piece type closure liner 50, and the section width W1 of the coated partial area on the lower surface of the upper layer 100 may be smaller than or equal to five-sixths of the section width W2 of the single-piece type closure liner 50, so that a manufacturer can adjust a coating range of the coating area 220 according to actual needs, and then the design elasticity of the manufacturer is further improved. In addition, when the section width W2 of the single-piece type closure liner 50 is large, the section width W1 of the coated partial area on the lower surface of the upper layer 100 may be small; and when the section width W2 of the single-piece type closure liner 50 is small, the section width W1 of the coated partial area on the lower surface of the upper layer 100 may be large.

In addition, for the conventional closure liner, when the spacing between the upper layer 100 and the sealing lamination layer 300 is thinned, and after electromagnetic induction sealing is performed, the pull valve of the conventional closure liner is often adhered to the film below, and consequently, the user cannot easily open the pull valve. In some embodiments, a material of the coating area 220 may be gloss oil or silicone oil, and a thickness of the coating area 220 is preferably 0.5 µm to 20 µm. Because the lower surface of the upper layer 100 is coated with the gloss oil or the silicone oil (namely, the coating area 220), the user can easily strip the coating structure with fingers, and therefore it is ensured that the user can directly pinch the coating structure with the hand to easily uncover the single-piece type closure liner 50 without the help of foreign objects.

In addition, in some embodiments, the coating mode of the coating area 220 may be, for example, full coating or dot coating, so that the user can easily strip the coating structure with fingers, thereby ensuring that the user can directly pinch the coating structure with the hand to easily uncover the single-piece type closure liner 50 without the help of foreign objects. Taking the dot coating mode as an example, after electromagnetic induction sealing is performed, a small amount of air between dot matrixes of dot-coated gloss oil or silicone oil in the single-piece type closure liner 50 provided by the present application may be heated and expanded by the electromagnetic induction sealing, which pushes the coating structure upward, thereby ensuring that the coating structure and the sealing lamination layer 300 are separated from each other, so that the user can easily strip the coating structure with fingers, thereby ensuring that the user can directly pinch the coating structure by hand to easily uncover the single-piece type closure liner 50 without the help of foreign objects.

Please refer to FIG. 2, FIG. 2 is a schematic cross-sectional diagram of a single-piece type closure liner 50 according to Embodiment 2 of the present application. More specifically, the sealing lamination layer 300 of the single-piece type closure liner 50 shown in FIG. 2 further includes a bonding film 330 and a lamination film 340. Since other elements are substantially the same as the single-piece type closure liner 50 shown in FIG. 1, details are not repeated herein.

### <<Bonding film 330>>

The bonding film 330 is disposed above the electromagnetic induction heating layer 310. In other words, the bonding film 330 may be directly compounded above the electromagnetic induction heating layer 310, and the bonding film 330 may also be indirectly compounded above the electromagnetic induction heating layer 310 (that is, other structures are disposed between the bonding film 330 and the electromagnetic induction heating layer 310). Taking FIG. 2 as an example, the bonding film 330 is disposed on the uppermost layer of the sealing lamination layer 300 and configured to be compounded with the surface film 110 of the upper layer 100. More specifically, the bonding film 330 is compounded with the surface film 110 of the upper layer 100 through the bonding adhesive 210. In some embodiments, a material of the bonding film 330 may be at least one selected from the group consisting of PE, PP, PA, EPP and EPE, and a thickness of the bonding film 330 is preferably 12 µm to 200 µm; and therefore, the peel strength after the bonding film 330 and the upper layer 100 are compounded can be improved.

### <<Lamination film 340>>

Taking FIG. 2 as an example, the lamination film 340 is disposed above the electromagnetic induction heating layer 310, and more specifically, the lamination film 340 is disposed between the bonding film 330 and the electromagnetic induction heating layer 310, thereby improving the tensile strength of the single-piece type closure liner 50. In some embodiments, a material of the lamination film 340 may be at least one selected from the group consisting of PET, PA, PEN, PE, and PP, and a thickness of the lamination film 340 is preferably 12 µm to 100 µm.

Taking FIG. 2 as an example, the bonding film 330 and the lamination film 340, as well as the electromagnetic induction heating layer 310 and the lamination film 340 can be compounded through an adhesive 390. In some embodiments, the adhesive 390 may be a dry compound adhesive that makes the peel strength between two compounded layers (for example, the bonding film 330 and the electromagnetic induction heating layer 310 or the electromagnetic induction heating layer 310 and the lamination film 340) greater than or equal to 4 N/15 mm, but is not limited thereto.

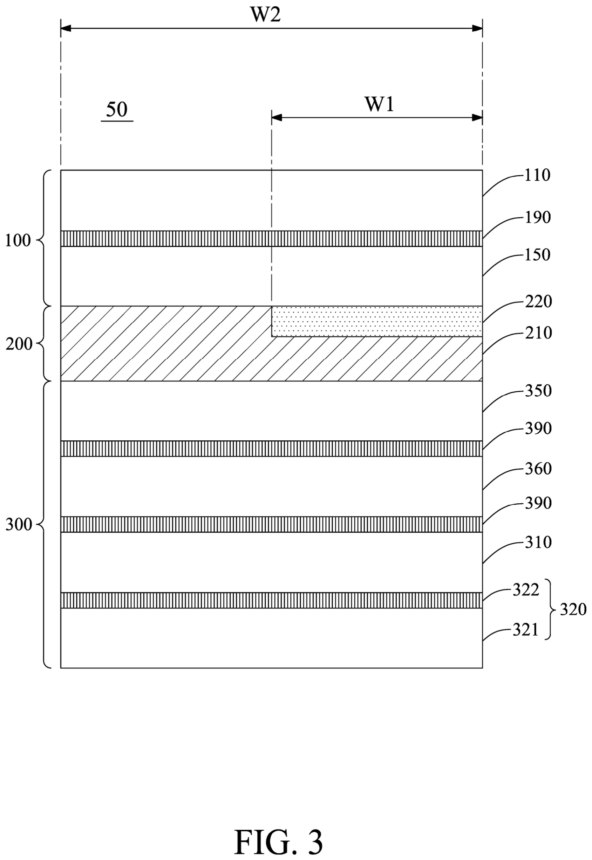

Please refer to FIG. 3, FIG. 3 is a schematic cross-sectional diagram of a single-piece type closure liner 50 according to Embodiment 3 of the present application. More specifically, the upper layer 100 of the single-piece type closure liner 50 shown in FIG. 3 further includes a first bonding film 150, and the sealing lamination layer 300 further includes a second bonding film 350 and a thickening layer 360. Since other elements are substantially the same as the single-piece type closure liner 50 shown in FIG. 1, details are not repeated herein.

### <<First bonding film 150>>

The first bonding film 150 is disposed below the surface film 110. In other words, the first bonding film 150 may be directly compounded below the surface film 110, and the first bonding film 150 may also be indirectly compounded below the surface film 110 (that is, other structures are disposed between the surface film 110 and the first bonding film 150). Taking FIG. 3 as an example, the first bonding film 150 is disposed on the lowermost layer of the upper layer 100 and is configured to be compounded with the sealing lamination layer 300. More specifically, the first bonding film 150 is compounded with the second bonding film 350 of the sealing lamination layer 300 through the bonding adhesive 210. In some embodiments, a material of the first bonding film 150 may be at least one selected from the group consisting of PE, PP, PA, EMMA and EMAC, and a thickness of the first bonding film 150 is preferably 12 µm to 100 µm; and therefore, the peel strength after the first bonding film 150 and the second bonding film 350 of the sealing lamination layer 300 are compounded can be improved.

### <<Second bonding film 350>>

The second bonding film 350 is disposed above the electromagnetic induction heating layer 310. In other words, the second bonding film 350 may be directly compounded above the electromagnetic induction heating layer 310, and the second bonding film 350 may also be indirectly compounded above the electromagnetic induction heating layer 310 (i.e., other structures are disposed between the second bonding film 350 and the electromagnetic induction heating layer 310). Taking FIG. 3 as an example, the second bonding film 350 is disposed on the uppermost layer of the sealing lamination layer 300 and is configured to be compounded with the upper layer 100. More specifically, the second bonding film 350 is compounded with the first bonding film 150 of the upper layer 100 through the bonding adhesive 210. In some embodiments, a material of the second bonding film 350 may be at least one selected from the group consisting of PE, PP, PA, EPP, and EPE, and a thickness of the second bonding film 350 is preferably 12 µm to 200 µm; and therefore, the peel strength after the second bonding film 350 and the first bonding film 150 of the upper layer 100 are compounded can be improved.

### <<Thickening layer 360>>

Taking FIG. 3 as an example, the thickening layer 360 is disposed above the electromagnetic induction heating layer 310 (specifically located between the second bonding film 350 and the electromagnetic induction heating layer 310), and is configured to increase the thickness of the single-piece type closure liner 50. In some embodiments, a material of the thickening layer 360 may be at least one selected from the group consisting of EPE, EPP, PE, PP and paper, and a thickness of the thickening layer 360 is preferably 60 µm to 3000 µm; and therefore, the thickness of the single-piece type closure liner 50 can be increased.

Taking FIG. 3 as an example, the second bonding film 350 and the thickening layer 360, as well as the thickening layer 360 and the electromagnetic induction heating layer 310 can be compounded by the adhesive 390. In some embodiments, the adhesive 390 may be a dry compound adhesive which makes the peel strength between two compounded layers (for example, the second bonding film 350 and the thickening layer 360 or the thickening layer 360 and the electromagnetic induction heating layer 310) greater than or equal to 4 N/15 mm, but is not limited thereto.

In addition, the surface film 110 and the first bonding film 150 can be compounded through the adhesive 190. In some embodiments, the adhesive 190 may be a dry compound adhesive which makes the peel strength between two compounded layers (for example, the surface film 110 and the first bonding film 150) greater than or equal to 4 N/15 mm, but is not limited thereto.

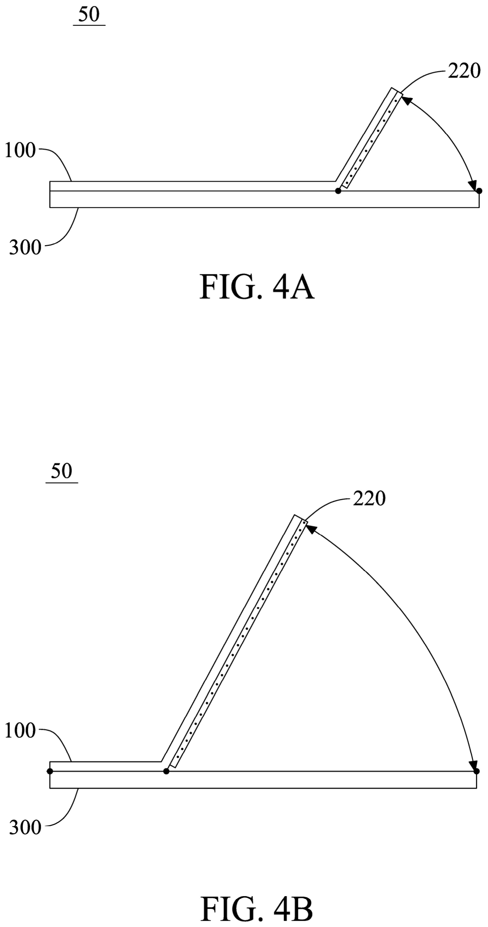

Please refer to FIG. 4A to FIG. 4B, FIG. 4A to FIG. 4B are side views of a single-piece type closure liner 50 according to the present application. More specifically, FIG. 4A shows an implementation form that a section width of the coated partial area (i.e., the coating area 220) on the lower surface of the upper layer 100 is equal to one-sixth of a section width of the single-piece type closure liner; and FIG. 4B shows an implementation form that the section width of the coated partial area on the lower surface of the upper layer 100 (i.e., the coating area 220) is equal to five-sixths of the section width of the single-piece type closure liner.

### [Wireless information integrated piece]

Then, the wireless information integrated flake according to the present application is described.

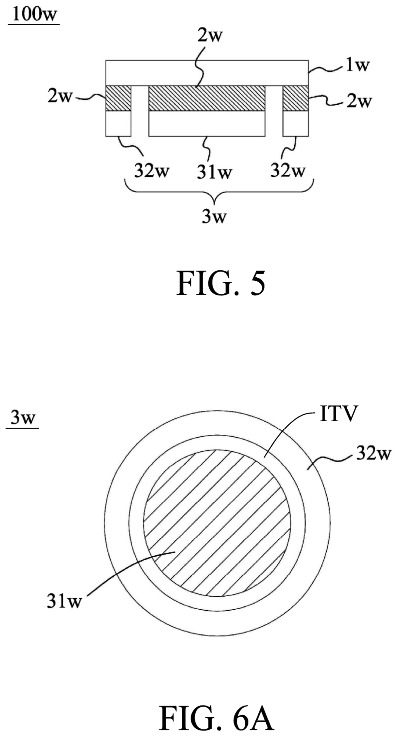

First, please refer to FIG. 5, FIG. 5 is a schematic cross-sectional diagram of a wireless information integrated flake 100w according to Embodiment 1 of the present application. As shown in FIG. 5, the wireless information integrated flake 100w may include a base film 1w, a first adhesive layer 2w and an information and heating layer 3w. The first adhesive layer 2w is located between the base film 1w and the information and heating layer 3w, so as to connect the base film 1w and the information and heating layer 3w. Each structure will be described in more detail below.

The base film 1w is used for manufacturing an initial layer of the wireless information integrated flake. In a specific embodiment, a material of the base film 1w may be at least one selected from the group consisting of Polyimide (PI), PEN, PET, Polycarbonate (PC), PP and PE. In addition, a thickness of the base film 1w is preferably 20 µm to 150 µm, and within this range, a longitudinal tensile strength is large. In addition, as shown in FIG. 5, a lower surface of the base film 1w is connected to the first adhesive layer 2w, and an upper surface of the base film 1w can serve as a printing surface for printing different patterns.

The first adhesive layer 2w is a layer for connecting the base film with the information and heating layer. In a specific embodiment, the first adhesive layer 2w is only needed to be able to connect the base film 1w with the information and heating layer 3w, and a material of the first adhesive layer 2w may be, for example, a composite adhesive. Moreover, a thickness of the first adhesive layer 2w may be 0.5 µm to 7 µm, and a peel strength between the two layers of connected materials may be greater than 4 N/15 mm.

Taking FIG. 5 as an example, the information and heating layer 3w includes an information area 31w and an electromagnetic induction heating ring 32w. The information area 31w has a wireless information reading, writing and transmitting function, so that follow-up product tracing can be facilitated. The information area 31w is provided with an antenna 312w and a chip 311w to be mutually conducted. The electromagnetic induction heating ring 32w can perform heating through electromagnetic induction of an electromagnetic field generated by an electromagnetic induction sealing machine, then the sealing layer of the closure liner is heated and melted to be adhered to the container opening, thus serving as an electromagnet induction closure liner for sealing the container opening. Most part of the wireless information integrated flake according to the present application can be heated at the electromagnetic induction heating ring 32w, and only at least one physical connecting bridge 33w between the antenna 312w and the electromagnetic induction heating ring 32w conducts extremely little heat. A length of the physical connecting bridge 33w may be 0.1 mm to 3 mm, a width of the physical connecting bridge 33w may be 0.01 mm to 5 mm, and a material of the physical connecting bridge 33w may be the same as that of the antenna 312w. Therefore, a large amount of heat generated during electromagnetic induction sealing can be prevented from being transmitted to a center area of the closure liner, and energy waste can be reduced. When applying to a closure liner containing a battery, a thickness of the information and heating layer 3w may be 6 µm to 2.5 mm; and when applying to a closure liner which does not contain the battery, the thickness of the information and heating layer 3w may be 6 µm to 300 µm.

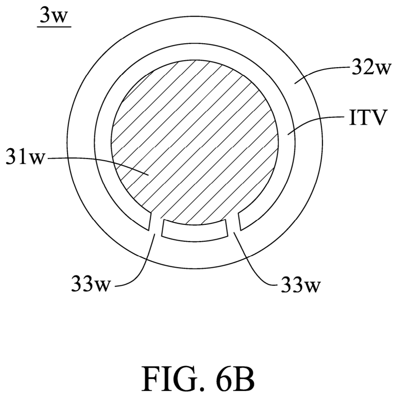

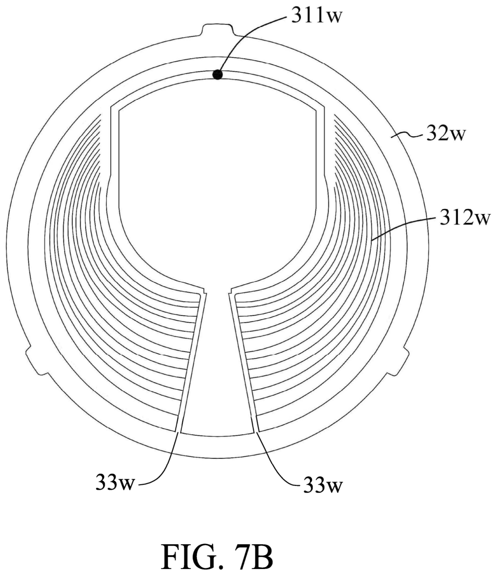

Then, FIG. 6A is a schematic plan diagram of a specific embodiment of an information and heating layer 3w according to the present application, FIG. 6B is a schematic plan diagram of another specific embodiment of an information and heating layer 3w according to the present application, and as shown in FIG. 6A or FIG. 6B, the electromagnetic induction heating ring 32w surrounds the information area 31w in a planar view angle; and as shown in FIG. 6A, a spacing ITV is fully filled between the electromagnetic induction heating ring 32w and the information area 31w, that is, no physical connection element (e.g., a physical connecting bridge as described later) is disposed between the electromagnetic induction heating rings 32w and the information area 31w. Thus, because the spacing ITV is fully filled between the electromagnetic induction heating ring 32w and the information area 31w, the spacing ITV can block heat from being conducted to the information area 31w when electromagnetic induction heating occurs, which is a preferred form. Moreover, the spacing ITV (a space between the outermost edge of the information area 31w and the innermost edge of the electromagnetic induction heating ring 32w) may be 0.1 mm to 3 mm. Then, as shown in FIG. 6B, most of the position between the electromagnetic induction heating ring 32w and the information area 31w has the spacing ITV, and the spacing ITV can block a majority of heat from being conducted to the information area 31w when electromagnetic induction heating occurs, and the spacing ITV (the space between the outermost edge of the information area 31w and the innermost edge of the electromagnetic induction heating ring 32w) may be 0.1 mm to 3 mm. In addition, at least one physical connecting bridge 33w (2 as marked in FIG. 6B and FIG. 7B as described later) can be disposed between the antenna 312w and the electromagnetic induction heating ring 32w, the length of the physical connecting bridge 33w may be 0.1 mm to 3 mm, and the width of the physical connecting bridge 33w may be 0.01 mm to 5 mm. In this case, although the electromagnetic induction heating ring 32w of a closed loop structure is electrically connected with the information area 31w, a distance of wireless communication is not reduced too much. That is, the spacing ITV can be fully filled between the electromagnetic induction heating ring 32w and the information area 31w, and the spacing ITV and the physical connecting bridge 33w can be disposed simultaneously.

In a specific embodiment, a material of the electromagnetic induction heating ring 32w may be metal such as aluminum, copper, gold, silver or tin, but is not limited thereto. In respect of the effect and costs of generating heat under a changing electromagnetic field, the electromagnetic induction heating ring 32w is preferably aluminum foil, and the thickness is preferably 6 µm to 40 µm.

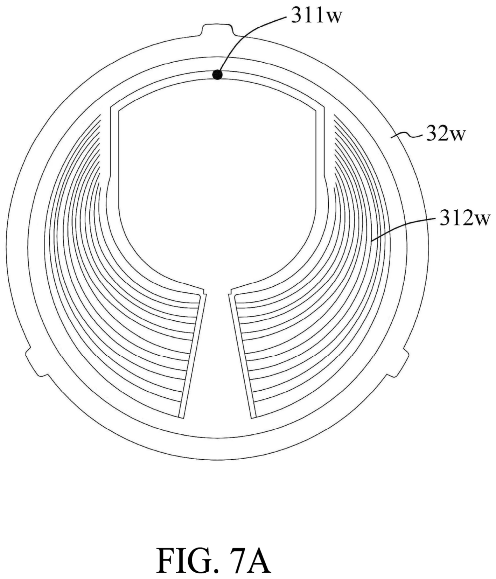

Then, FIG. 7A is a schematic plan diagram of a specific embodiment of an information area according to the present application, and FIG. 7B is a schematic plan diagram of another specific embodiment of an information area according to the present application, wherein FIG. 7A shows a corresponding implementation form that the spacing ITV is fully filled between the electromagnetic induction heating ring 32w and the information area 31w in FIG. 6A, and FIG. 7B shows a corresponding implementation form that the spacing ITV is formed in most of positions between the electromagnetic induction heating ring 32w and the information area 31w in FIG. 6B. In addition, as shown in FIG. 7A or FIG. 7B, the information area 31w includes a chip 311w and an antenna 312w. When the wireless information transmission function can be achieved, the chip 311w and the antenna 312w may be arranged in a mode of FIG. 7A or FIG. 7B or other modes based on an RFID frequency band to be used by the user, and which is not specially limited.

On the other hand, the chip 311w may have a unique identification code and may be selected according to purposes, for example, the chip 311w may be a radio frequency identification near field communication (RFID _NFC) chip, a radio frequency identification high frequency (RFID_HF) chip, a radio frequency identification ultrahigh frequency (RFID _UHF) chip or a radio frequency identification microwave (RFID _MW) chip and the like, which is not specially limited. The above chips can be matched with the antenna 312w to achieve the wireless information communication function.

Then, the antenna 312w is mainly configured to generate a signal for wireless transmission, and a material of the antenna 312w may be metal such as copper, silver, gold, tin or aluminum, which is not specially limited.

In addition, although the base film 1w is disposed above and the information and heating layer 3w is disposed below in FIG. 5, the sequence of the base film 1w and the information and heating layer 3w may be reversed according to needs, that is, the base film 1w is disposed below and the information and heating layer 3w is disposed above.

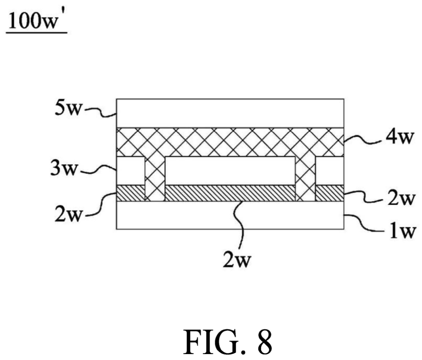

In addition, the wireless information integrated flake may be a wireless information integrated flake 100w', as shown in FIG. 8, besides the base film 1w, the first adhesive layer 2w and the information and heating layer 3w, the wireless information integrated flake further includes a protective layer 5w and a second adhesive layer 4w. The protective layer 5w is located on one side, away from the base film 1w, of the information and heating layer 3w. The second adhesive layer 4w is located between the information and heating layer 3w and the protective layer 5w, and is a layer for connecting the information and heating layer 3w and the protective layer 5w.

In a specific embodiment, the second adhesive layer 4w is only required to be able to connect the information and heating layer 3w with the protective layer 5w, and a material of the second adhesive layer 4w may be a dry compound adhesive, which is not specifically limited. A thickness of the second adhesive layer 4w may be 0.5 µm to 7 µm, and preferably, a peel strength between the two layers of connected materials is greater than 4 N/15 mm. In addition, as shown in FIG. 8, the second adhesive layer 4w can extend to the spacing that fills between the electromagnetic induction heating rings 32w and the information area 31w, so as to improve the overall structural strength of the wireless information integrated flake 100w'.

Then, the protective layer 5w is described. The protective layer 5w is configured to protect the information area 31w (namely, the chip 311w, the antenna 312w and an additionally added battery) from damaging the chip 311w and the battery by external force to affect the wireless information transmission capability; and a material of the protective layer 5w may be at least one selected from the group consisting of Polyethylene Terephthalate (PET), Polypropylene (PP), Polyethylene (PE), Polyamide (PA), Polyvinylidene Chloride (PVDC), Ethylene Vinyl Alcohol Copolymer (EVOH), Polyethylene Naphthalate (PEN) and Polyimide (PI). In a preferable specific embodiment, a thickness of the protective layer 5w may be 12 µm to 100 µm.

In addition, an upper surface or a lower surface of the protective layer 5w may be used as a printing surface. Therefore, although FIG. 8 shows that the base film 1 is disposed below and the protective layer 5w is disposed above (the upper surface of the protective layer 5w is used as the printing surface), the sequence of the base film 1w and the protective layer 5w may be reversed as required, namely, the base film 1w is disposed above and the protective layer 5w is disposed below (the lower surface of the protective layer 5w is used as the printing surface).

### [Manufacturing of single-piece type closure liner (1)]

The single-piece type closure liner 50 shown in FIG. 2 is manufactured based on the following steps.

First, a lower surface of a lamination film roll material is coated with an adhesive, and the lower surface of the lamination film roll material and an electromagnetic induction heating layer roll material are subjected to dry compounding, and then placed in a curing chamber for more than 24 hours, so as to obtain a first lamination part roll material.

Then, a partial area on a lower surface of a surface film roll material is coated with gloss oil or silicone oil in a full coating manner, so as to obtain a functional layer roll material.

Then, an upper surface of the first lamination part roll material is coated with the adhesive, and the upper surface of the first lamination part roll material and a bonding film roll material are subjected to dry compounding, and then placed in the curing chamber for more than 24 hours, so as to obtain a second lamination part roll material.

Then, a surface of the electromagnetic induction heating layer of the second lamination part roll material is coated with the adhesive, and the surface of the electromagnetic induction heating layer of the second lamination part roll material and a sealing film roll material are subjected to dry compounding, and then placed in the curing chamber for more than 24 hours, so as to obtain a lower lamination part roll material. Alternatively, a surface of a lamination film of the second lamination part roll material is coated with a hot melt glue, so as to obtain the lower lamination part roll material.

Then, a surface of a bonding film of the lower lamination part roll material is coated with a bonding adhesive, and the surface of the bonding film of the lower lamination part roll material and a lower surface of the functional layer roll material are subjected to dry compounding, and then placed in the curing chamber for more than 24 hours, so as to obtain a single-piece type closure liner roll material. Then, the single-piece type closure liner in a proper size is cut according to the requirements of the user.

### [Manufacturing of single-piece type closure liner (2)]

The single-piece type closure liner 50 shown in FIG. 3 is manufactured based on the following steps.

First, a lower surface of a surface film roll material is coated with an adhesive, and the lower surface of the surface film roll material and a first bonding film roll material are subjected to dry compounding, and then placed in a curing chamber for more than 24 hours, so as to obtain an upper lamination part roll material.

Then, a partial area on a surface of a first bonding film of the upper lamination part roll material is coated with gloss oil or silicone oil in a full coating manner, so as to obtain a functional layer roll material.

Then, an upper surface of an electromagnetic induction heating layer roll material is coated with the adhesive, and the upper surface of the electromagnetic induction heating layer roll material and a thickening layer roll material are subjected to dry compounding, and then placed in the curing chamber for more than 24 hours, so as to obtain a first lamination part roll material.

Then, a surface of the thickening layer of the first lamination part roll material is coated with the adhesive, and the surface of the thickening layer of the first lamination part roll material and a second bonding film roll material are subjected to dry compounding, and then placed in the curing chamber for more than 24 hours, so as to obtain a second lamination part roll material.

Then, a surface of the electromagnetic induction heating layer of the second lamination part roll material is coated with the adhesive, and the surface of the electromagnetic induction heating layer of the second lamination part roll material and a sealing film roll material are subjected to dry compounding, and then placed in the curing chamber for more than 24 hours, so as to obtain a lower lamination part roll material. Alternatively, the surface of the electromagnetic induction heating layer of the second lamination part roll material is coated with a hot melt glue, so as to obtain the lower lamination part roll material.

Then, a surface of a second bonding film of the lower lamination part roll material is coated with the bonding adhesive, and the surface of the second bonding film of the lower lamination part roll material and a lower surface of the functional layer roll material are subjected to dry compounding, and then placed in the curing chamber for more than 24 hours, so as to obtain a single-piece type closure liner roll material. Then, the single-piece type closure liner in a proper size is cut according to the requirements of the user.

In the manufacturing of the single-piece type closure liner (1) and the single-piece type closure liner (2), the partial area is between one-sixth and five-sixths of the section width of the single-piece type closure liner. The peel strength between two layers of materials compounded by the adhesive is greater than or equal to 4 N/15 mm; and the peel strength between two layers of materials compounded by the bonding adhesives is greater than or equal to 17.8 N/15 mm. The temperatures of 5 sections of a heating tunnel above a dry type compounding machine are 60°C to 65°C, 65°C to 70°C, 70°C to 75°C, 75°C to 80°C and 80°C to 85°C. The temperature of press roller of the dry type compounding machine is 50°C to 60°C. The temperature of the curing chamber is 50°C to 55°C.

### [Manufacturing of wireless information integrated flake roll material]

The wireless information integrated flake roll material in a preferred embodiment of the present application is manufactured based on the following steps, and the wireless information integrated flake roll material may be used in the manufacturing process of the single-piece type closure liner roll material as one implementation form of the electromagnetic induction heating layer roll material.

First, a lamination surface of a base film roll is coated with a dry compound adhesive (a first adhesive layer), and after it is compounded with a lamination surface of a metal foil roll material, a wireless information integrated flake blank roll material is made. Then, etching processing is carried out on metal foil of the wireless information integrated flake blank roll material, an antenna and a chip are bonded electrically, and then the chip and a connecting wire for connecting the chip with the antenna are packaged through a dispenser using a chip packaging protective adhesive. In this case, the metal foil of the wireless information integrated flake blank roll material forms an information and heating layer, and the wireless information integrated flake blank roll material is a wireless information integrated flake roll material.

A peel strength between the two layers of materials compounded through the dry compound adhesive is greater than 4 N/15 mm.

In addition, if it is needed to add a battery to the information and heating layer, a battery piece and the chip may be processed to be electrically connected through a fusion welding machine or a conductive adhesive.

On the other hand, on the basis of the wireless information integrated flake roll material, a lamination surface of a protective layer roll material is coated with a dry compound adhesive (a second adhesive layer), and after it is subjected to be laminated with the surface (the surface away from the base film) of the information and heating layer of the wireless information integrated flake roll material, the lamination material is placed in the curing chamber for curing for more than 24 hours, so as to obtain a wireless information integrated flake roll material related to another embodiment.

It is to be noted that the above description is only an illustrative example of the manufacturing of the single-piece type closure liner 50 according to the present application. In other words, those of ordinary skill in the art can also adjust the sequence to manufacture the single-piece type closure liner 50 according to the present application.

## Claims

1. A single-piece type closure liner (50), sequentially comprising, from top to bottom:
an upper layer (100), comprising a surface film (110);
a bonding layer (200), comprising a bonding adhesive (210) and a coating area (220); and
a sealing lamination layer (300), sequentially comprising an electromagnetic induction heating layer (310) and a sealing layer (320) from top to bottom,
wherein the coating area (220) is a partial area coated on a lower surface of the upper layer (100), and the bonding layer (200) combines the upper layer (100) with the sealing lamination layer (300) through the bonding adhesive (210).

2. The single-piece type closure liner (50) according to claim 1, wherein a material of the coating area (220) is gloss oil or silicone oil.

3. The single-piece type closure liner (50) according to claim 1, wherein a coating mode of the coating area (220) is full coating or dot coating.

4. The single-piece type closure liner (50) according to claim 1, wherein the sealing lamination layer (300) further comprises:
a bonding film (330), disposed above the electromagnetic induction heating layer (310),
wherein a material of the bonding film (330) is at least one selected from the group consisting of Polyethylene (PE), Polypropylene (PP), Polyamide (PA), Expandaple Polyproplene (EPP) and Expandable Polyethylene (EPE).

5. The single-piece type closure liner (50) according to claim 1, wherein the sealing lamination layer (300) further comprises:
a lamination film (340), disposed above the electromagnetic induction heating layer (310),
wherein a material of the lamination film (340) is at least one selected from the group consisting of Polyethylene Terephthalate (PET), PA, Polyethylene Naphthalate (PEN), PE and PP.

6. The single-piece type closure liner (50) according to claim 1, wherein a material of the surface film (110) is at least one selected from the group consisting of PP, PET, PE, PA and Ethylene-Methyl Acrylate Copolymer (EMAC).

7. The single-piece type closure liner (50) according to claim 1, wherein the sealing layer (320) is a hot melt glue or a combination of a sealing film (321) and an adhesive (322), a material of the hot melt glue is at least one selected from the group consisting of Ethylene Vinyl Acetate copolymer (EVA), Polyisobutylene (PIB), Ethylene Butyl Acrylate Copolymer (EBA), Ethylene Acrylic Acid copolymer (EAA), EMAC, Polyacrylate, Polyacetate and Ethylene Methacrylic Acid copolymer (EMAA), a material of the sealing film (321) is at least one selected from the group consisting of PE, PP, PA, Polyvinylidene Chloride (PVDC), Ethylene Vinyl Alcohol Copolymer (EVOH) and PET, and the adhesive (322) is disposed between the sealing film (321) and the electromagnetic induction heating layer (310).

8. The single-piece type closure liner (50) according to claim 1, wherein the bonding adhesive (210) is a dry compound adhesive or a hot melt lamination glue, and a material of the hot melt lamination glue is at least one selected from the group consisting of PE, PP, EMAC, EMAA, EAA, Ethylene Ethyl Acrylate Copolymer (EEA) and Ethylene Methyl Methacrylate (EMMA).

9. The single-piece type closure liner (50) according to claim 1, wherein the electromagnetic induction heating layer (310) is aluminum foil or a wireless information integrated flake (100w; 100w').

10. The single-piece type closure liner (50) according to claim 9, wherein the wireless information integrated flake (100w; 100w') comprises:
a base film (1w);
an information and heating layer (3w), comprising an information area (31w) and an electromagnetic induction heating ring (32w); and
a first adhesive layer (2w), located between the base film (1w) and the information and heating layer (3w),
wherein the information area (31w) is provided with an antenna (312w) and a chip (311w) to be mutually conducted, and the electromagnetic induction heating ring (32w) surrounds the information area (31w) in a plane view angle.

11. The single-piece type closure liner (50) according to claim 10, wherein the wireless information integrated flake (100w') further comprises a protective layer (5w), located on one side of the information and heating layer (3w) away from the base film (1w); and a second adhesive layer (4w), located between the information and heating layer (3w) and the protective layer (5w).

12. The single-piece type closure liner (50) according to claim 10, wherein a spacing is formed between the electromagnetic induction heating ring (32w) and the information area (31w).

13. The single-piece type closure liner (50) according to claim 12, wherein the spacing is a space between the outermost edge of the information area (31w) and the innermost edge of the electromagnetic induction heating ring (32w) and is 0.1 mm to 3 mm.

14. The single-piece type closure liner (50) according to claim 10, wherein the spacing is fully filled between the electromagnetic induction heating ring (32w) and the information area (31w).

15. The single-piece type closure liner (50) according to claim 10, wherein the information and heating layer (3w) further comprises at least one physical connecting bridge (33w) configured to connect the information area (31w) and the electromagnetic induction heating ring (32w).
